# EUROPÄISCHE PATENTANMELDUNG

(11) **EP 0 689 928 A2**
(43) Veröffentlichungstag der Anmeldung: **03.01.1996**
(21) Anmeldenummer: 95109748.4
(22) Anmeldetag: 22.06.1995
(51) Int. Cl.: B29C 65/00, B23B 51/10

(54) **Verfahren und Vorrichtung zur Bearbeitung von Kunststoffrohren**

(30) Priorität: 02.07.1994 DE 4423258
(71) Anmelder: THYSSEN POLYMER GMBH, D-81671 München (DE)
(72) Erfinder: Fellinger, Herbert, D-94522 Markt Wallersdorf (DE)

(57) **Zusammenfassung**

Die Erfindung bezieht sich auf ein Verfahren und eine Vorrichtung und Verfahren zur Bearbeitung von Kunststoffrohren aus Polyolefinen, PVC etc. insbesondere solcher Rohre, die mit einer Sperrschicht versehen sind und mit weiteren Kunststoffrohren, -fittings etc. zu verbinden sind, bei dem vor dem Schweißvorgang die auf der Rohroberfläche angebrachte Sperrschicht im Gebiet des Schweißbereiches mechanisch entfernt wird.

## Beschreibung

Die Erfindung bezieht sich auf ein Verfahren zur Bearbeitung von Kunststoffrohren, die mit einer Sperrschicht versehen sind, insbesondere auf ein Schweißverfahren und eine Vorrichtung zur Durchführung des Verfahrens.

Ein übliches Verschweißen solcher mit einer Sperrschicht versehenen Kunststoffrohre aus PS, PE, PP, PVC oder dergl. mit anderen Kunststoffrohren, -muffen, -fittings etc. ist nicht möglich, da die Sperrschicht, z.B. gegen Sauerstoffdiffussion aufgebracht, einen Schweißvorgang verhindert.

Um Kunststoffrohre mit Sperrschicht mit anderen -rohren etc. verbinden zu können, z.B. zur Endlosverlegung von Rohrleitungen durch Muffenschweißung von Rohrbund an Rohrbund ist bereits vorgeschlagen worden (ZS: "Si- Sanitär, Heizung, Klimainformationen", Nr. 4/94, S. 18 unten), über der Verbindungsstelle eine Metallhülse anzubringen, die beide Kunststoffrohrenden oder Rohrende mit Muffe, Fitting. usw. überbrückt und mittels einer entsprechend ausgebildeten Vorrichtung, z.B. einer Zange verquetscht und somit auf das Rohrende preßt. Eine solche Verbindung ist zwar dicht, hat jedoch verschiedene Nachteile. Einerseits ist die Verbindung nicht kunststoffgerecht, da es sich dabei um eine Metall-Kunststoffverbindung handelt. Andererseits sind viele Kunststoffe, insbesondere Polyolefine, wie z.B. Polypropylen (PP), äußerst kerbschlagempfindlich. Eine Verletzung des Kunststoffrohrendes durch ein Verpressen der Schiebehülsenverbindung aus Metall im Kunststoffmaterial ist auf Dauer schädlich.

Hier setzt die Erfindung ein.

Der Erfindung liegt daher die Aufgabe zugrunde, mit einer Sperrschicht versehene Kunststoffrohre, insbesondere Polyolefinrohre, wie z.B. PB, PE, und PP miteinander und mit anderen Kunststoffrohren und -teilen, wie beispielsweise Fittings, Muffen etc. auf einfache Weise miteinander zu verschweißen. Die Aufgabe ist durch die Erfindung, wie sie in den Ansprüchen beschrieben ist, gelöst.

Die mit der erfindungsgemäß vorgeschlagenen Vorrichtung erzielten Vorteile liegen insbesondere darin, daß bisher einer Schweißung nicht zugängliche, mit Sperrschicht versehene Polyolefinrohre untereinander und mit Fittings, Muffen etc. auf einfache Weise verschweißbar sind und dabei Fremdmaterialien als Verbindungsteile, d.h. Metallhülsen, -muffen, -kupplungen u.s.w. sowie aufwendige von Hand durchzuführende Arbeiten von vornherein vermieden werden, indem eine einwandfreie, restlose und exakt ringförmige Entfernung der Sperrschicht im Schweißbereich vor dem eigentlichen Schweißvorgang durchgeführt wird und ggfl. eine automatisierte Verschweißung zweier Rohrenden aus beispielsweise Polyolefinen möglich ist. Die im Schweißbereich in den beiden zu verbindenden Rohrenden eingesetzten Stützhülsen weisen, außer der reinen Stützfunktion und mechanische Entlastung der Schweißnaht, durch die stufenartige Ausbildung ihres Außendurchmessers, den Vorteil auf, daß eine leichte Aufweitung des Rohrendes und die genaue Zentrierung der Stützhülse in auch unrunden Rohrenden bei einfacher Montage ermöglicht und außerdem das Wandern der Stützhülsen im Betriebszustand durch die Rohrleitung, durch strömende Medien verursacht, verhindert wird.

Die Erfindung ist nachstehend anhand eines in den Abbildungen dargestellten Ausführungsbeispieles näher erläutert.

Es zeigt:
- Fig. 1: einen Schnitt durch die Vorrichtung,
- Fig. 2: eine Draufsicht auf die Vorrichtung gem. Fig. 1 und
- Fig. 3: Rohrverbindung
- Fig. 4: Schweißvorrichtung
Die Erfindung bezieht sich auf eine Vorrichtung zur Bearbeitung von Kunststoffrohren, insbesondere solcher Rohre, die mit einer Sperrschicht versehen sind und deren Enden mit weiteren Rohren durch Schweißen zu verbinden sind.

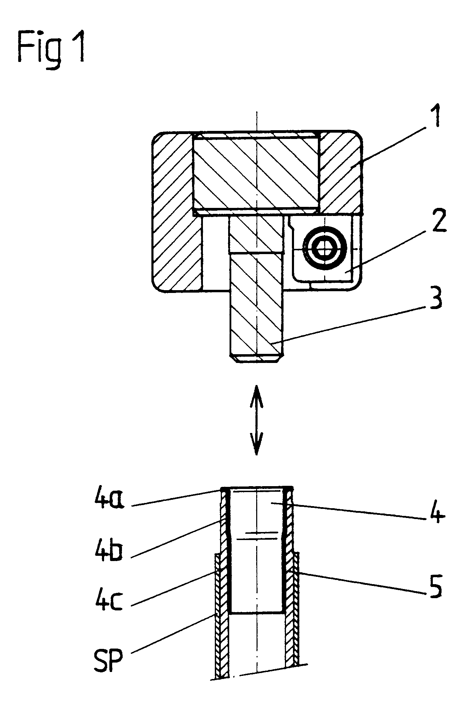

Der in Fig. 1 dargestellte Schnitt durch die erfindungsgemäße Vorrichtung zeigt einen Messerträger 1, der mit einem verstellbaren Schälmesser 2 ausgerüstet ist und in seinem Oberteil eine Aussparung für die Aufnahme eines Zentrierdornes 3 besitzt. Das in seinem oberen, zu verschweißende Ende mit einer verlorenen Stützhülse 4 versehene Kunststoffrohr 5 weist auf seiner äußeren Oberfläche eine Sperrschicht SP auf.

Die gegen Sauerstoffdiffussion auf die äußere Oberfläche des Kunststoffrohres 5 aufgebrachte Sperrschicht SP wird vor dem Schweißvorgang auf der Länge des Schweißbereiches mittels des in dem Messerträger 1 enthaltenen Schälmessers 2 nach Aufstecken des mit der Stützhülse 4 versehenen Rohres 5 auf den Zentrierdorn 3 entfernt, indem der Messerträger 1 auf dem Rohr gedreht wird. Dies kann von Hand oder motorisch vorgenommen werden. Das Schälmesser 2 ist feststehend oder verstellbar angeordnet und kann auch per Automatik verstellt werden. Das Schälmesser 2 besitzt an seinem oberen Ende eine Anschrägung, um am äußersten Rohrende eine Fase anbringen zu können. Anstelle eines Schälmessers 2 kann beispielsweise auch eine andere, mechanisch wirkende Einrichtung vorgesehen werden. Eine chemische Entfernung der Sperrschicht empfiehlt sich auf Baustellen aus verschiedenen sicherheitstechnischen Gründen nicht.

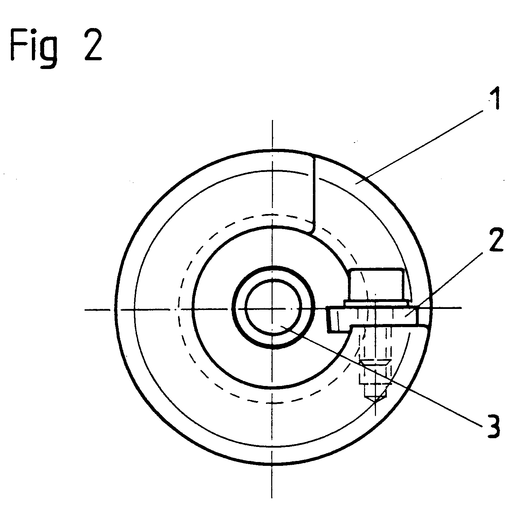

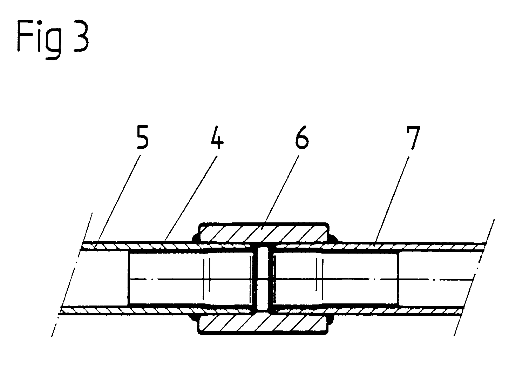

Die Fig. 2 ist eine Draufsicht auf die Vorichtung, aus der die Anordnung des Schälmessers 2 und des Zentrierdornes 3 hervorgeht. Eine fertige Rohrverbindung, hergestellt unter Anwendung des erfindungsgemäßen Verfahrens und der Vorrichtung, zeigt die Fig. 3. Es sind die Enden zweier Kunststoffrohre 5 und 7 nach Entfernen der Sperrschicht SP im Schweißbereich durch eine Kunststoffmuffe 6 durch Schweißung verbunden.

Die Stützhülsen 4 sind in den Rohrenden 5,7 belassen, um ein Einknicken derselben bei der Erwärmung für den Schweißvorgang zu verhindern und die Schweißnaht mechanisch zu entlasten und deren Bruch bei Überbeanspruchung zu verhindern. Durch den endseitigen Flansch 4a, sowie die unterschiedlichen Außendurchmesser 4b und 4c, ist ein Wandern der Stützhülsen durch die Rohrleitung verhindert.

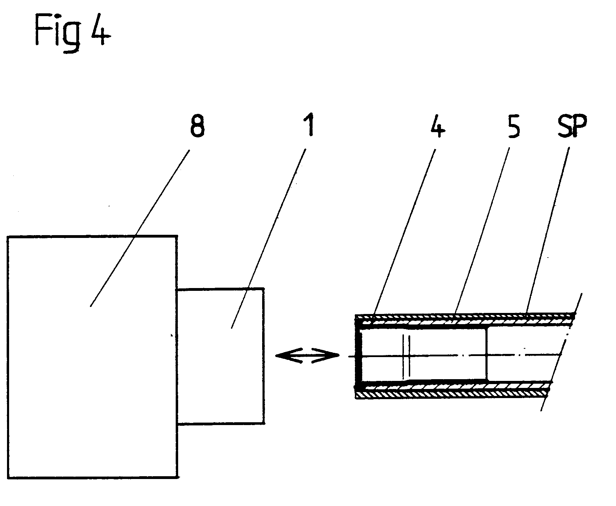

Die Fig. 4 zeigt eine Ausführungsvariante, bei der Messerträger 1 Bestandteil der Schweißvorrichtung 8 ist, was zu einer rationelleren Bearbeitung beiträgt.

### STÜCKLISTE

- 1: Messerträger
- 2: Schälmesser
- 3: Zentrierdorn
- 4: Stützhülse
- 5: Kunststoffrohr
- 6: Muffe
- 7: Kunststoffrohr
- Sp: Sperrschicht

## Patentansprüche

1. Verfahren zur Bearbeitung von Kunststoffrohren, die außen mit einer Sperrschicht versehen sind, insbesondere zur Verschweißung zweier solcher Rohre miteinander oder von Rohren mit Kunststoff-Fittings, Muffen usw., **dadurch gekennzeichnet,** daß vor dem Schweißvorgang die Sperrschicht von der Rohroberfläche im vorgesehenen Schweißbereich entfernt wird.

2. Verfahren nach Anspruch 1, **dadurch gekennzeichnet,** daß die Sperrschicht mechanisch entfernt wird.

3. Verfahren nach Anspruch 1 und 2, **dadurch gekennzeichnet,** daß vor dem Schweißvorgang eine Stützhülse mit mindestens zwei unterschiedlichen Außendurchmessern und einem Flansch am äußeren Ende in das zu verschweißende Rohrende eingeführt wird.

4. Vorrichtung zur Durchführung des Verfahrens gem. Anspruch 1 - 3, **gekennzeichnet durch** einen drehbar auf dem zu bearbeitenden Kunststoffrohr (5) aufgesetzten Messerträger (1) mit einem Zentrierdorn (3) für die temporäre Aufnahme des Kunststoffrohres (5) und einer neben dem sich im Messerträger (1) auf dem Zentrierdorn (3) befindenden Kunststoffrohr (5) angeordneten Schäleinrichtung (2), wobei sich im Endabschnitt der Kunststoffrohre (5,7) je eine Stützhülse 4) befindet, die endseitig mit einem Flansch (4a) versehen ist und mindestens zwei unterschiedliche Außendurchmesser (4b,4c) aufweist.

5. Vorrichtung nach Anspruch 4 **dadurch gekennzeichnet,** daß das die Schäleinrichtung (2) als Schälmesser ausgebildet ist.

6. Vorrichtung nach Anspruch 4 und 5, **dadurch gekennzeichnet,** daß die Schäleinrichtung (2) verstellbar ist.

7. Vorrichtung nach Anspruch 4 bis 6, **dadurch gekennzeichnet,** daß das Schälmesser (2) automatisch in Richtung auf das zu bearbeitende Rohrende (5) verfahrbar ist.

8. Vorrichtung nach Anspruch 4 und einen der folgenden, **dadurch gekennzeichnet,** daß der Messerträger (1) Bestandteil der Schweißvorrichtung (8) ist.

9. Vorrichtung nach Anspruch 4 und einen der folgenden, **dadurch gekennzeichnet,** daß der Messerträger (1) mit einem Antrieb für eine Rotation versehen ist.
